## Europäisches Patentamt

## European Patent Office

## Office européen des brevets

(11) Veröffentlichungsnummer: **0 059 777**
**B1**

(12)

# EUROPÄISCHE PATENTSCHRIFT

(45) Veröffentlichungstag der Patentschrift:
**23.04.86**

(51) Int. Cl.⁴: **F 16 J 15/12, F 16 H 57/02**

(21) Anmeldenummer: **81105211.7**

(22) Anmeldetag: **04.07.81**

(54) **Flachdichtung.**

(30) Priorität: **06.03.81 DE 8106296 U**

(43) Veröffentlichungstag der Anmeldung:
**15.09.82 Patentblatt 82/37**

(45) Bekanntmachung des Hinweises auf die Patenterteilung:
**23.04.86 Patentblatt 86/17**

(84) Benannte Vertragsstaaten:
**AT DE FR GB IT SE**

(56) Entgegenhaltungen:
**DE - A - 2 437 989**
**US - A - 3 175 832**
**US - A - 3 231 289**

(73) Patentinhaber: **Elring Dichtungswerke GmbH, Höhenstrasse 24, D-7012 Fellbach (DE)**

(72) Erfinder: **Maschmann, Siegfried, Ahornstrasse 29, D-7432 Utrach 3 (DE)**

(74) Vertreter: **Hoeger, Stellrecht & Partner, Uhlandstrasse 14c, D-7000 Stuttgart 1 (DE)**

## Beschreibung

Mit den herkömmlichen Flachdichtungen lässt sich ein Spalt zwischen mit räumlich stark veränderlicher Dichtflächenpressung gegeneinandergepressten Bauteilflächen dauerhaft nicht befriedigend abdichten. Dieser Fall ist z.B. immer dann gegeben, wenn im Dichtflächenbereich Bauteilstösse liegen; es gibt aber auch andere Anwendungen von Flachdichtungen, bei denen zwischen Bereichen normaler Dichtflächenpressung Bereiche besonders niederer statischer oder dynamischer Dichtflächenpressung auftreten. Bisher wurden in diesen Fällen realtiv dicke Flachdichtungen aus Weichstoffplattenmaterial eingesetzt, die sich aufgrund ihrer Kompressibilität Vor- und Rücksprüngen der Dichtflächen, wie sie bei Bauteilstössen auftreten, hinreichend anpassen können. Die erforderliche Dicke und Kompressibilität dieser Flachdichtungen ist aber meistens auch nachteilig, insbesondere dann, wenn Kräfte über die Dichtstelle zu übertragen sind, da sie einen erheblichen Abfall der zu übertragenden und senkrecht zu den Dichtflächen verlaufenden Kräfte zur Folge haben. Schliesslich können die dicken Dichtungen unzulässig hohe Verformungen an den an den Dichtspalt angrenzenden Bauteilen bewirken. Wird hingegen eine aus dünnerem Weichstoffplattenmaterial hergestellte Flachdichtung verwendet, so kann diese den Dichtspalt im Bereich von Vor- bzw. Rücksprüngen der Dichtungsflächen nicht zuverlässig abdichten, und ausserdem besteht die Gefahr, dass eine solche Flachdichtung durch Relativbewegungen zwischen den den Dichtspalt bildenden Bauteilen zerrieben wird.

Der Erfindung lag deshalb die Aufgabe zugrunde, eine Flachdichtung zu schaffen, die sich verhältnismässig dünn ausbilden lässt und dennoch einen Spalt zwischen mit räumlich veränderlicher Dichtflächenpressung gegeneinandergepressten Bauteilflächen zuverlässig abdichten kann.

Aus der US-A-3 175 832 geht eine rahmenförmige Flachdichtung als bekannt hervor, die aus mehreren Rahmenschenkeln und diese miteinander verbindenden Eckstücken zusammengesetzt ist; jedes dieser Teile hat die Form eines flachen Metallblechstücks und besitzt auf seinen beiden Flachseiten jeweils eine in Rahmen-Umfangsrichtung verlaufende Nut, in der sich jeweils ein elastomerer Dichtelementeinsatz befindet. Um zu verhindern, dass das abzudichtende Medium zwischen den aneinanderstossenden Enden der Dichtelementeinsätze einander benachbarter Rahmenelemente hindurchdringen kann, weist jeder Dichtelementeinsatz an seinen beiden Enden erhöhte Endbereiche auf, die beim Anziehen der beiden gegeneinander abzudichtenden Bauteile gegen die Flachdichtung zusammengepresst werden, wobei das elastomere Material so verdrängt wird, dass es den Spalt zwischen den Enden einander benachbarter Dichtelementeinsätze schliesst. Jeder Dichtelementeinsatz besitzt an seiner Aussenseite ein ungefähr W-förmiges Profil mit einer mittleren Dichtrippe, die über die betreffende Oberfläche der Flachdichtung übersteht und beidseitig von nutförmigen Ausweichräumen für das elastomere Material begrenzt wird. Die Querschnittsverhältnisse zwischen Ausweichräumen und Dichtrippe müssen ausserordentlich genau aufeinander abgestimmt werden, denn wenn die Ausweichräume zu klein sind, werden die Dichtelementeinsätze beim Festziehen der beiden gegeneinander abzudichtenden Bauteilflächen gegen die Flachdichtung beschädigt, sind die Ausweichräume aber zu gross, besteht die Gefahr, dass der Spalt zwischen einander benachbarten Dichtelementeinsätzen beim Anziehen der beiden Bauteile gegen die Flachdichtung nicht geschlossen wird, da sich das elastomere Material der erhöhten Endbereiche einander benachbarter Dichtelementeinsätze vollständig in die Ausweichräume hinein verdrängen lässt.

Zur Lösung der vorstehend erwähnten Aufgabe geht die Erfindung aus von einer Flachdichtung mit einer Dichtungsplatte mit mindestens einer länglichen Ausnehmung zur Aufnahme eines von den Längsrändern dieser Ausnehmung gehaltenen länglichen Dichtelementeinsatzes, welcher über mindestens eine der Oberflächen der Dichtungsplatte vorspringt und infolge seiner Ausbildung aus einem Elastomer eine höhere Elastizität besitzt als die ihm benachbarten Bereiche der Dichtungsplatte, sowie mit Ausweichräumen für infolge einer Dichtflächenpressung zwischen der Flachdichtung und die letztere zwischen sich aufnehmenden Bauteilflächen verdrängtes Einsatzmaterial, wobei eine solche Flachdichtung erfindungsgemäss so ausgebildet wird, dass zur Abdichtung eines Bereichs mit räumlich veränderlicher Dichtflächenpressung die Ausnehmung die Gestalt eines Durchbruchs aufweist, der sich längs dieses Bereichs über dessen ganze Länge und über die Länge des einstückig ausgebildeten Dichtelementeinsatzes erstreckt, und dass die Ausweichräume zwischen den Längsrändern des Dichtelementeinsatzes und des Durchbruchs im Längsabstand voneinander vorgesehen sind. Bei der erfindungsgemässen Flachdichtung sind die Ausweichräume für das elastomere Material des Dichtelementeinsatzes also nicht innerhalb des letzteren vorgesehen, sondern zwischen dessen Längsrändern und denjenigen des Durchbruchs der Dichtungsplatte, und da sich diese Ausweichräume beliebig gross machen lassen, ohne dass die Gefahr eines Undichtwerdens besteht, stellt die erfindungsgemässe Flachdichtung verhältnismässig geringe Anforderungen an die Herstellungsgenauigkeit. Da der Dichtelementeinsatz eine wesentlich höhere Kompressibilität besitzt als die Dichtungsplatte, die ja auch imstande sein muss, Kräfte über den von den gegeneinander abzudichtenden Bauteilen gebildeten Dichtspalt zu übertragen, kann sich der Dichtelementeinsatz Vor- bzw. Rücksprüngen in den abzudichtenden Bauteilflächen vollständig anpassen, ohne dass in diesem Bereich hohe Dichtflächenpressungen erforderlich sind, um eine einwandfreie Abdichtung herbeizuführen. Andererseits ermöglicht die verhältnismässig dünn und deshalb mit höherem Elastizitätsmodul ausführbare Dichtungsplatte eine gute Übertragung von Kräften über den Dichtspalt.

Wenn vorstehend von einer Dichtungsplatte die Rede ist, so bedeutet dies nicht, dass die Flachdichtung Plattenform haben muss; vielmehr soll damit nur zum Ausdruck gebracht werden, dass es sich bei dem Träger des Dichtelementeinsatzes um ein flaches Bauteil aus Dichtungsmaterial handelt. Ausserdem sei darauf hingewiesen, dass eine räumlich veränderliche Dichtflächenpressung natürlich auch dann gegeben ist, wenn die abzudichtenden Bauteilflächen mit Ausnahme des Bereichs eines Vor- bzw. Rücksprungs in den abzudichtenden Flächen überall mit derselben Flächenpressung gegeneinander bzw. gegen die Flachdichtung gepresst werden; es ist aber auch denkbar, dass ein Dichtelementeinsatz nur in einem von mehreren Bereichen vorgesehen ist, in denen keine räumlich konstante Dichtflächenpressung vorliegt.

Im Hinblick auf die Gestaltung der Ausweichräume der erfindungsgemässen Flachdichtung sei auf die DE-A-24 37 989 verwiesen, die einen elastomeren O-Ring betrifft, welcher innen und aussen einen flachen metallischen Anschlagring hält, die die Verkleinerung des abzudichtenden Spalts beim Anziehen der abzudichtenden Bauteilflächen gegen den O-Ring begrenzen. Die beiden Anschlagringe besitzen auf ihren dem O-Ring zugewandten Seiten im Längsabstand voneinander Aussparungen als Ausweichräume für das elastomere Material des O-Rings.

Bei einer bevorzugten Ausführungsform der erfindungsgemässen Flachdichtung sind die Längsränder des Durchbruchs der Dichtungsplatte mit die Ausweichräume bildenden Auswölbungen versehen.

In der Regel wird es sich empfehlen, den Dichtelementeinsatz beidseitig über die Oberfläche der Dichtungsplatte vorspringen zu lassen. Am einfachsten stimmt man die Abmessungen des Dichtelementeinsatzes und des Durchbruchs der Dichtungsplatte so aufeinander ab, dass der Dichtelementeinsatz mit Press- oder Klemmsitz zwischen den Rändern des Durchbruchs gehalten wird. Bei höheren Stückzahlen dürfte es sich jedoch empfehlen, den Dichtelementeinsatz in den Durchbruch der Dichtungsplatte einzuspritzen, d.h. den Dichtelementeinsatz als Spritzgussteil zu gestalten.

Im folgenden soll eine bevorzugte Ausführungsform der erfindungsgemässen Flachdichtung anhand der beigefügten Zeichnung näher erläutert werden; in der letzteren zeigen:

Fig. 1A eine Seitenansicht des mehrteiligen Maschinengehäuses mit der eingebauten Flachdichtung;

Fig. 1B eine perspektivische Darstellung der in Fig. 1A gezeigten Teile nach Art einer Explosionszeichnung;

Fig. 2 eine Draufsicht auf die Flachdichtung.

Fig. 3 eine Ansicht des in Fig. 1B gezeigten Bereichs der Flachdichtung sowie der benachbarten Teile des Maschinengehäuses, gesehen in Richtung des Pfeils A in Fig. 1B;

Fig. 4 den Ausschnitt B der Flachdichtung in grösserem Massstab, und

Fig. 5 einen Schnitt durch die Flachdichtung nach der Linie 5–5 in Fig. 4.

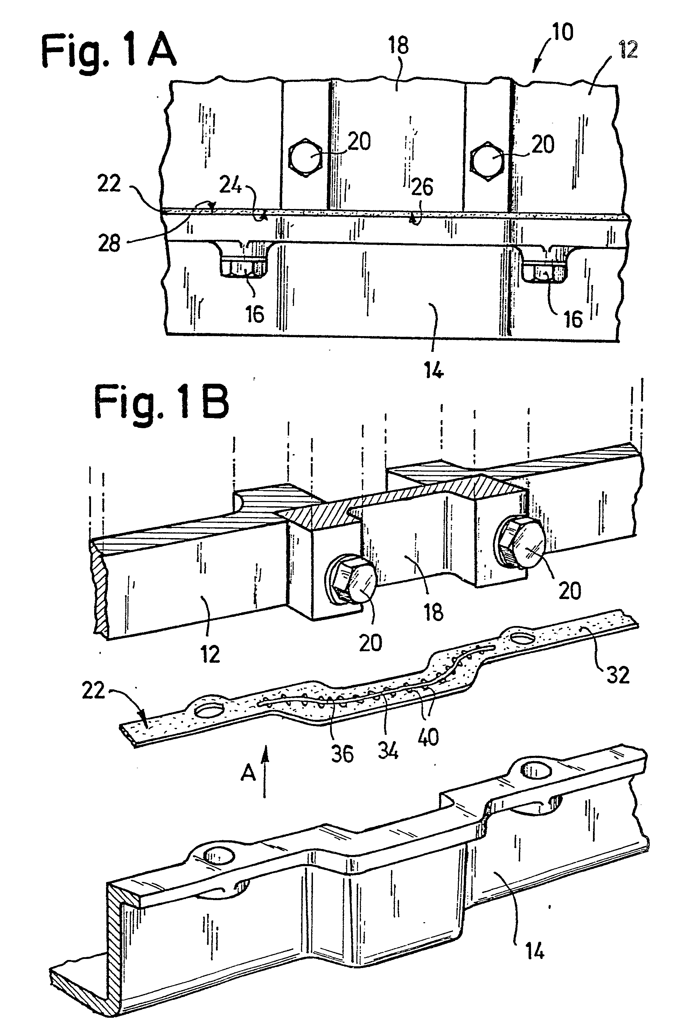

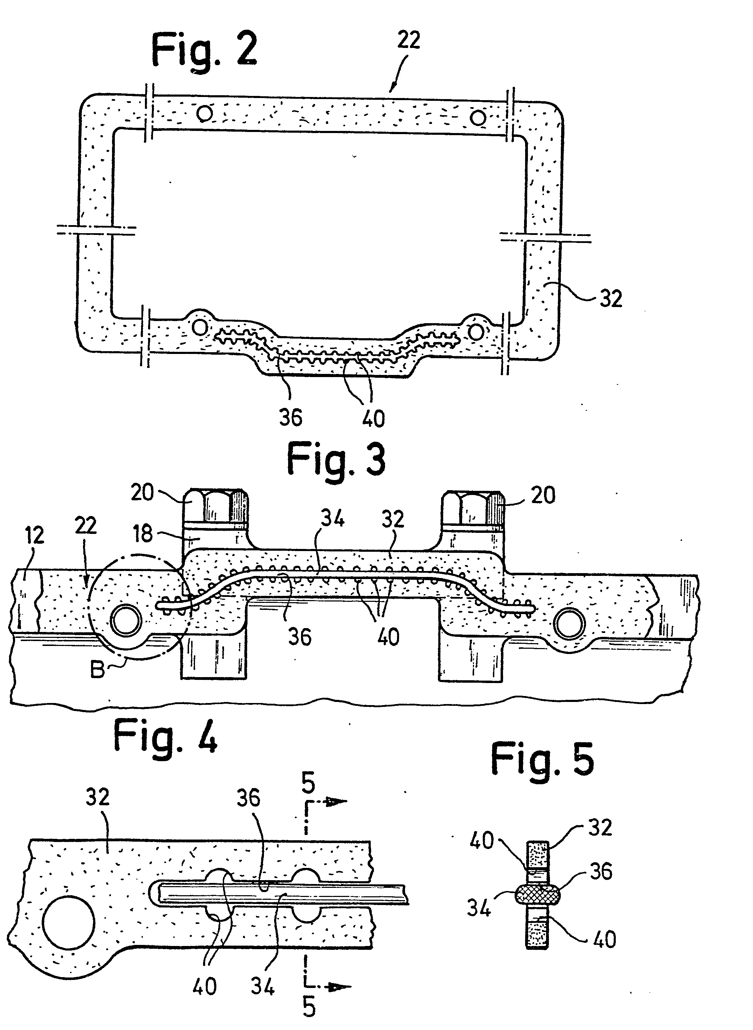

Die Fig. 1A und 1B zeigen ein Getriebegehäuse 10 mit einem Gehäuseoberteil 12 und einem Gehäuseunterteil 14, die mittels Schrauben 16 miteinander verbunden sind. Das Getriebegehäuse besitzt ferner eine durch einen Deckel 18 verschlossene Öffnung im Gehäuseoberteil 12, und der Deckelbefestigung dienen Schrauben 20.

Zur Abdichtung des Spaltes zwischen Gehäuseober- und Gehäuseunterteil 12 bzw. 14 ist eine erfindungsgemässe Flachdichtung 22 vorgesehen, die durch die Schrauben 16 zwischen den Dichtflächen 24 und 26 des Gehäuseoberteils 12 bzw. des Deckels 18 und der Dichtfläche 28 des Gehäuseunterteils 14 eingespannt wird.

Nun lässt sich im Regelfall nicht völlig verhindern, dass am Übergang von der Dichtfläche 22 des Gehäuseoberteils 12 zur Dichtfläche 26 des Deckels 18 ein, wenn auch kleiner, Stoss, d.h. eine Stufe in der abzudichtenden Fläche, entsteht, der sich mit den herkömmlichen dünnen und standfesten Flachdichtungen nicht beherrschen lässt, auch wenn ein solcher Stoss nur in der Grössenordnung von einigen hundertstel Milimeter liegt. Deshalb besitzt die Flachdichtung 22 in einer Dichtungsplatte 32 einen als Dichtelement ausgebildeten hochelastischen Einsatz 34, der sich, wie die Fig. 1B und 3 erkennen lassen, über den Bereich des Deckels 18 sowie darüber hinaus noch ein Stück weit in die Dichtungsfläche 24 des Gehäuseoberteils 12 hinein erstreckt.

Die Dichtungsplatte 32 besteht aus einem Metallblech, welches beidseitig mit einer dünnen Kunststoffauflage versehen ist und einen Schlitz 36 aufweist, zwischen dessen Rändern der Dichteinsatz 34 gehalten wird. Erfindungsgemäss steht dieser Dichteinsatz beidseitig über die Dichtungsplatte 32 vor, wie die Fig. 5 erkennen lässt, wobei auf jeder Seite ein Überstand von ca. 10 bis 40% und vorzugsweise von ca. 20% der Stärke der Dichtungsplatte 32 sich als besonders günstig erwiesen hat. Bevorzugte Materialien für die Dichtungsplatte 32 und den Dichteinsatz 34 sind kunststoffbeschichtetes Stahlblech einerseits und Gummi andererseits.

Da Gummi und andere Elastomere in der Regel imkompressibel sind, wurden in den Rändern des Schlitzes 36 Auswölbungen 40 vorgesehen, in die beim Anziehen der abzudichtenden Flächen gegeneinander das Material des Dichtungseinsatzes 34 ausweichen kann.

Natürlich könnte man daran denken, nicht einen einzigen Einsatz 34, sondern mehrere Dichteinsätze vorzusehen, die sich jeweils nur über die Übergangsbereiche von Deckel 18 und Gehäuseoberteil 12 erstrecken. Einfacher und zweckmässiger ist es jedoch, jedem Stufen in den Dichtflächen hervorrufenden Bauteil nur einen einzigen Dichteinsatz zuzuordnen, der sich über das betreffende Bauteil sowie in die benachbarten Bereiche hinein erstreckt.

## Patentansprüche

1. Flachdichtung mit einer Dichtungsplatte (32) mit mindestens einer länglichen Ausnehmung (36) zur Aufnahme eines von den Längsrändern der Ausnehmung gehaltenen länglichen Dichtelementeinsatzes (34), welches über mindestens eine der Oberflächen der Dichtungsplatte (32) vorspringt und infolge seiner Ausbildung aus einem Elastomer eine höhere Elastizität besitzt als die ihm benachbarten Bereiche der Dichtungsplatte, sowie mit Ausweichräumen (40) für infolge einer Dichtflächenpressung zwischen der Flachdichtung (22) und die letztere zwischen sich aufnehmenden Bauteilflächen (24, 26) verdrängtes Einsatzmaterial, dadurch gekennzeichnet, dass zur Abdichtung eines Bereichs mit räumlich veränderlicher Dichtflächenpressung die Ausnehmung die Gestalt eines Durchbruchs (36) aufweist, der sich längs dieses Bereichs über dessen ganze Länge und über die Länge des einstückig ausgebildeten Dichtelementeinsatzes (34) erstreckt, und dass die Ausweichräume (40) zwischen den Längsrändern des Dichtelementeinsatzes (34) und des Durchbruchs (36) im Längsabstand voneinander vorgesehen sind.

2. Flachdichtung nach Anspruch 1, dadurch gekennzeichnet, dass die Längsränder des Durchbruchs (36) mit die Ausweichräume bildenden Auswölbungen (40) versehen sind.

3. Flachdichtung nach Anspruch 1 oder 2, dadurch gekennzeichnet, dass die Dichtungsplatte (32) mit einem beidseitig vorspringenden Einsatz (34) versehen ist.

4. Flachdichtung nach einem oder mehreren der vorstehenden Ansprüche, dadurch gekennzeichnet, dass der Einsatz (34) aus einem Werkstoff besteht, dessen Elastizitätsmodul kleiner als derjenige der Dichtungsplatte (32) ist.

5. Flachdichtung nach einem oder mehreren der vorstehenden Ansprüche, dadurch gekennzeichnet, dass der Einsatz (34) mit Press- oder Klemmsitz in der Ausnehmung (36) gehalten ist.

6. Flachdichtung nach einem oder mehreren der vorstehenden Ansprüche, dadurch gekennzeichnet, dass der Einsatz (34) aus einem Elastomer, insbesondere aus Gummi, besteht.

7. Flachdichtung nach einem oder mehreren der vorstehenden Ansprüche, dadurch gekennzeichnet, dass die Dichtungsplatte (32) im wesentlichen aus Metallblech besteht.

8. Flachdichtung nach Anspruch 7, dadurch gekennzeichnet, dass das Metallblech beidseitig mit einer dünnen Kunststoffauflage beschichtet ist.

9. Flachdichtung nach einem oder mehreren der vorstehenden Ansprüche, dadurch gekennzeichnet, dass der Einsatz (34) als in situ geformtes Spritzgussteil ausgebildet ist.

10. Flachdichtung nach einem oder mehreren der Ansprüche 1 bis 9, dadurch gekennzeichnet, dass in der Dichtungsplatte (32) den Enden des Einsatzes (34) benachbart Durchbrüche für die Dichtflächenpressung erzeugende Schrauben (16) vorgesehen sind.

## Claims

1. A flat gasket comprising a gasket plate (32) with at least one elongated recess (36) for accommodating an elongated sealing element insert (34) held by the longitudinal edges of said recess, said insert projecting beyond at least one of the surfaces of said gasket plate (32) and having a greater elasticity than the regions of the gasket plate adjacent to it due to its construction from an elastomer, as well as comprising dispersal areas (40) for insert material displaced as a result of sealing surface pressure between said flat gasket (22) and structural surfaces (24, 26) accommodating the latter between them, characterised in that for sealing a region having a spatially variable sealing surface pressure said recess has the form of an opening (36) extending along said region and along its entire length and the length of said one-piece sealing element insert (34), and that said dispersal areas (40) are provided between the longitudinal edges of said sealing element insert (34) and of said opening (36) in longitudinal spaced relation to one another.

2. Flat gasket as defined in claim 1, characterized in that said longitudinal edges of said opening (36) are provided with curvatures (40) forming said dispersal areas.

3. Flat gasket as defined in claims 1 or 2, characterized in that said gasket plate (32) is provided with an insert (34) protruding on both sides.

4. Flat gasket as defined in any or several of the preceding claims, characterized in that said insert (34) consists of a material having a coefficient of elasticity smaller than that of the gasket plate (32).

5. Flat gasket as defined in any or several of the preceding claims, characterized in that said insert (34) is held in said recess (36) in a press or clamp fit.

6. Flat gasket as defined in any or several of the preceding claims, characterized in that said insert (34) consists of an elastomer, in particular rubber.

7. Flat gasket as defined in any or several of the preceding claims, characterized in that said gasket plate (32) consists substantially of sheet metal.

8. Flat gasket as defined in claim 7, characterized in that said sheet metal is coated on both sides with a thin layer of plastic.

9. Flat gasket as defined in any or several of the preceding claims, characterized in that said insert (34) is designed as a formed-in-place injection molded part.

10. Flat gasket as defined in any or several of claims 1 to 9, characterized in that openings for screws (16) generating said sealing surface pressure are provided in said gasket plate (32) adjacent the ends of said insert (34).

## Revendications

1. Joint plat comprenant une plaque d'étanchéité (32) comportant au moins un évidement (36) de forme allongée, pouvant recevoir un élément d'étanchéité inséré (34) de forme allongée, maintenu par les bords longitudinaux de l'évidement, qui dépasse au moins de l'une des surfaces de la plaque d'étanchéité (32) et qui, du fait qu'il est constitué par un élastomère, possède une élasticité supérieure à celle des zones de la plaque d'étanchéité situées à proximité, la plaque d'étanchéité comportant également des espaces de dégagement (40) pour le matériau constituant l'élément d'insertion, lorsqu'il est refoulé par la pression exercée au niveau des surfaces d'étanchéité entre le joint plat (22) et les surfaces (24, 26) des éléments de construction qui enserrent ce joint, caractérisé en ce que, pour assurer l'étanchéité d'une zone dans laquelle la compression des surfaces d'étanchéité est spatialement variable, l'évidement a la forme d'un passage ouvert (36) qui s'étend le long de la zone en question, sur toute sa longueur et sur toute la longueur de l'élément d'étanchéité inséré (34) réalisé d'une seule pièce, et en ce que les espaces de dégagement (40), situés entre les bords longitudinaux de l'élément d'étanchéité inséré (34) et du passage ouvert (36), sont à une certaine distance les uns des autres dans le sens longitudinal.

2. Joint plat selon la revendication 1, caractérisé en ce que les bords longitudinaux du passage ouvert (36) sont munis d'évidements en forme de voûtes (40), constituant les espaces de dégagement.

3. Joint plat selon l'une des revendications 1 ou 2, caractérisé en ce que la plaque d'étanchéité (32) comporte un élément d'insertion (34) qui fait saillie des deux côtés.

4. Joint plat selon l'une des revendications 1 à 3, caractérisé en ce que l'élément d'insertion (34) est constitué par un matériau dont le module d'élasticité est inférieur à celui du matériau qui constitue la plaque d'étanchéité (32).

5. Joint plat selon l'une des revendications 1 à 4, caractérisé en ce que l'élément d'insertion (34) est maintenu dans l'évidement (36) par pression et serrage.

6. Joint plat selon l'une des revendications 1 à 5, caractérisé en ce que la pièce d'insertion (34) est constituée par un élastomère, notamment par du caoutchouc.

7. Joint plat selon l'une des revendications 1 à 6, caractérisé en ce que la plaque d'étanchéité (32) est essentiellement constituée par de la tôle métallique.

8. Joint plat selon la revendication 7, caractérisé en ce que la tôle métallique est recouverte sur ses deux faces d'une mince couche de matière plastique.

9. Joint plat selon l'une ou plusieurs des revendications précédentes, caractérisé en ce que la pièce d'insertion (34) est réalisée comme une pièce moulée par injection in situ.

10. Joint plat selon l'une ou plusieurs des revendications 1 à 9, caractérisé en ce qu'il est prévu dans la plaque d'étanchéité (32), à proximité des extrémités de la pièce d'insertion (34), des perforations pour les vis (16) assurant la pression sur la surface d'étanchéité.

# Fig. 1A

# Fig. 1B

# Fig. 2

# Fig. 3

# Fig. 4

# Fig. 5